# NEUE EUROPÄISCHE PATENTSCHRIFT

(11) **EP 0 923 695 B2**
(45) Veröffentlichungstag und Bekanntmachung des Hinweises auf die Entscheidung über den Einspruch: **17.07.2013**
(45) Hinweis auf die Patenterteilung: 27.06.2007
(21) Anmeldenummer: 98924021.3
(22) Anmeldetag: 19.03.1998
(51) Int. Cl.: F21V 14/04

(54) **SCHEINWERFERANLAGE FÜR FAHRZEUGE FÜR ABBLENDLICHT UND FERNLICHT**
LOW BEAM HEADLAMPS AND HIGH BEAM HEADLAMPS FOR VEHICLES
PHARE DE CROISEMENT ET PHARE DE ROUTE

(30) Priorität: 11.07.1997 DE 19729826
(43) Veröffentlichungstag der Anmeldung: 23.06.1999
(73) Patentinhaber: Automotive Lighting Reutlingen GmbH, 72762 Reutlingen (DE)
(72) Erfinder: NEUMANN, Rainer, D-70195 Stuttgart (DE)
(74) Vertreter: Dreiss
(86) Internationale Anmeldenummer: PCT/DE1998/000802
(87) Internationale Veröffentlichungsnummer: WO 1999/002917

(56) Entgegenhaltungen:
- EP-A- 0 579 184
- EP-A1- 0 483 767
- EP-A1- 0 628 765
- EP-A1- 0 791 780
- EP-A1- 0 816 749
- DE-A- 4 238 273
- FR-A- 1 461 607
- FR-A1- 2 675 092
- FR-A1- 2 698 154
- GB-A- 2 192 449
- JP-A- 04 342 622
- PATENT ABSTRACTS OF JAPAN vol. 017, no. 196 (M-1397), 16. April 1993 & JP 04 342622 A (MATSUSHITA ELECTRIC IND CO LTD), 30. November 1992
- VALEO: 'éclairage et signalisation tourisme (catalogue extraits)'

## Beschreibung

Die Erfindung geht aus von einer Scheinwerferanlage für Fahrzeuge für Abblendlicht und Fernlicht nach der Gattung des Anspruchs 1.

Die EP 0 791 780 A1 und die EP 0 816 749 A1 offenbaren jeweils eine Scheinwerferanlage für Fahrzeuge mit verschiedenen Scheinwerfern zur Erzeugung von Abblendlicht und Fernlicht.

Eine Scheinwerferanlage nach dem Oberbegriff des Anspruchs 1 ist durch die DE 42 38 273 A1 bekannt. Diese Scheinwerferanlage weist wenigstens einen Scheinwerfer zur Erzeugung des Abblendlichts und wenigstens einen weiteren Scheinwerfer auf, der zur Erzeugung des Fernlichts zusätzlich zum wenigstens einen Abblendlichtscheinwerfer betrieben wird. Es kann dabei vorgesehen sein, dass durch das von dem wenigstens einen weiteren Scheinwerfer ausgesandte Lichtbündel im wesentlichen nur der Fernbereich vor dem Fahrzeug beleuchtet wird, der durch das vom Abblendlichtscheinwerfer ausgesandte Lichtbündel nicht beleuchtet wird oder die Lichtbündel können sich teilweise überlagern. Insbesondere wenn der Abblendlichtscheinwerfer mit einer Lichtquelle ausgerüstet ist, die einen grossen Lichtstrom aussendet, wie beispielsweise einer Gasentladungslampe, wird von diesem ein wirkungsvolles Abblendlichtbündel ausgesandt, durch das auch der Fernbereich unterhalb der vorgeschriebenen Helldunkelgrenze des Abblendlichtbündels mit hoher Beleuchtungsstärke beleuchtet wird. Bei der Umschaltung der Scheinwerferanlage ausgehend von ihrer Betriebsstellung für Abblendlicht in ihre Betriebsstellung für Fernlicht erscheint dabei die durch das Lichtbündel des wenigstens einen weiteren Scheinwerfers bewirkte Ausleuchtung des Fernbereichs vor dem Fahrzeug für den Fahrzeuglenker als relativ schwach.

Aufgabe der vorliegenden Erfindung ist es, die bekannte Scheinwerferanlage zu verbessern.

Diese Aufgabe wird gemäß der Erfindung durch eine Scheinwerferanlage mit den Merkmalen des Anspruchs 1 gelöst.

### Vorteile der Erfindung

Die erfindungsgemässe Scheinwerferanlage mit den Merkmalen gemäss dem Anspruch 1 hat den Vorteil, dass durch die Erhöhung der Reichweite des von dem wenigstens einen Abblendlichtscheinwerfer ausgesandten Lichtbündels in der Betriebsstellung für Fernlicht die durch den wenigstens einen weiteren Scheinwerfer bewirkte Ausleuchtung des Fernbereichs vor dem Fahrzeug unterstützt wird und somit eine Ausleuchtung des Fernbereichs mit hoher Beleuchtungsstärke und ein wirkungsvolles Fernlicht erreicht wird.

In den abhängigen Ansprüchen sind vorteilhafte Ausgestaltungen und Weiterbildungen der erfindungsgemässen Scheinwerferanlage angegeben. Die Änderung der Reichweite des von dem wenigstens einen Abblendlichtscheinwerfer ausgesandten Lichtbündels kann auf einfache Weise wie im Anspruch 2 angegeben durch Verschwenkung zumindest eines Teils des Abblendlichtscheinwerfers erfolgen. Es kann dabei wie im Anspruch 4 angegeben der gesamte Abblendlichtscheinwerfer oder wie im Anspruch 5 angegeben als Teil nur dessen Reflektor verschwenkt werden. Vorzugsweise kann zur Änderung der Reichweite des von dem wenigstens einen Abblendlichtscheinwerfers ausgesandten Lichtbündels wie im Anspruch 6 angegeben eine Verstelleinrichtung verwendet werden, die ohnehin zur fahrzeugneigungsabhängigen Verstellung des Abblendlichtscheinwerfers vorhanden ist.

### Zeichnung

Zwei Ausführungsbeispiele der Erfindung sind in der Zeichnung dargestellt und in der nachfolgenden Beschreibung näher erläutert. Es zeigen
Fig. 1 ein Fahrzeug mit einer Scheinwerferanlage in einer Vorderansicht,
Fig. 2 das Fahrzeug sowie von der Scheinwerferanlage gemäss dem Stand der Technik in der Betriebsstellung für Fernlicht ausgesandte Lichtbündel in der Vogelperspektive,
Fig. 3 das Fahrzeug sowie von der erfindungsgemässen Scheinwerferanlage in der Betriebsstellung für Fernlicht ausgesandte Lichtbündel,
Fig. 4 die Scheinwerferanlage ausschnittsweise gemäss einem ersten Ausführungsbeispiel in einem vertikalen Längsschnitt und
Fig. 5 die Scheinwerferanlage ausschnittsweise gemäss einem zweiten Ausführungsbeispiel in einem vertikalen Längsschnitt.

### Beschreibung der Ausführungsbeispiele

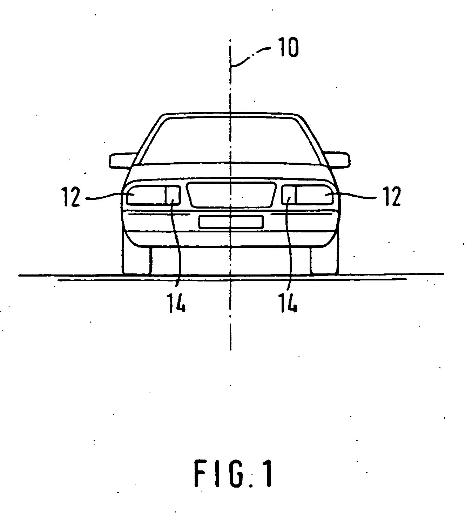

Ein in Fig. 1 dargestelltes Fahrzeug, insbesondere ein Kraftfahrzeug, weist an seiner Vorderfront in bekannter Weise eine Scheinwerferanlage auf, die symmetrisch zu einer Fahrzeuglängsmittelebene 10 angeordnet zwei Scheinwerfer 12 zur Erzeugung des Abblendlichts, nachfolgend als Abblendlichtscheinwerfer bezeichnet, und zwei weitere Scheinwerfer 14 aufweist, die zur Erzeugung des Fernlichts zu den Abblendlichtscheinwerfern 12 zugeschaltet werden und die nachfolgend als Fernlichtscheinwerfer bezeichnet werden. Die Abblendlichtscheinwerfer 12 und die Fernlichtscheinwerfer 14 einer Fahrzeugseite können dabei nebeneinander oder übereinander angeordnet sein und als getrennte Scheinwerfer ausgebildet sein oder in einem gemeinsamen Gehäuse zusammengefasst sein, wobei sie jedoch getrennte Reflektoren aufweisen.

In der Betriebsstellung der Scheinwerferanlage für Abblendlicht werden nur die Abblendlichtscheinwerfer 12 betrieben, von denen in bekannter Weise die Abblendlichtbündel mit oberer Helldunkelgrenze ausgesandt werden. Bei der Verwendung von Gasentladungslampen als Lichtquellen für die Abblendlichtscheinwerfer 12 können die Abblendlichtbündel sowohl eine starke horizontale Streuung aufweisen, so dass insbesondere auch die seitlichen Ränder der Fahrbahn sowie die Umgebung über diese hinaus vor dem Fahrzeug wirkungsvoll beleuchtet werden, als auch eine grosse Reichweite aufweisen mit wirkungsvoller Beleuchtung des Bereichs nahe unterhalb der Helldunkelgrenze.

In der Betriebsstellung für Fernlicht werden die Abblendlichtscheinwerfer 12 und zusätzlich zu diesen auch die Fernlichtscheinwerfer 14 betrieben. Die Fernlichtscheinwerfer 14 können derart ausgebildet sein, dass durch die von diesen ausgesandten Fernlichtbündel im wesentlichen nur der Fernbereich vor dem Fahrzeug oberhalb der Helldunkelgrenze der von dem Abblendlichtscheinwerfer 12 ausgesandten Abblendlichtbündel beleuchtet wird. Alternativ können die Fernlichtscheinwerfer 14 auch derart ausgebildet sein, dass durch die von diesen ausgesandten Fernlichtbündel sowohl der Fernbereich vor dem Fahrzeug oberhalb der Helldunkelgrenze der durch die Abblendlichtscheinwerfer 12 ausgesandten Abblendlichtbündel als auch ein Bereich unterhalb der Helldunkelgrenze beleuchtet wird, so dass sich die Fernlichtbündel und die Abblendlichtbündel teilweise überlagern.

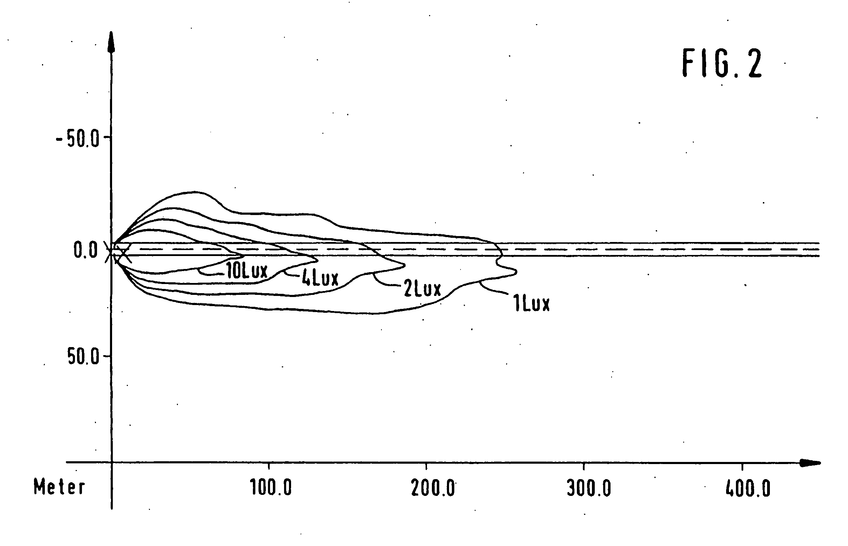

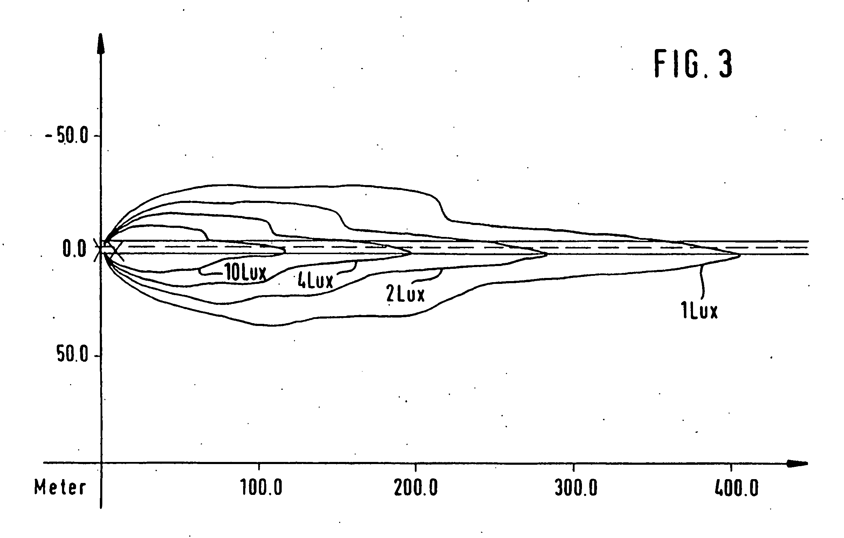

Erfindungsgemäss ist vorgesehen, dass bei der Umschaltung der Scheinwerferanlage in ihre Betriebsstellung für Fernlicht zusätzlich zur Inbetriebnahme der Fernlichtscheinwerfer 14 die Reichweite der von den Abblendlichtscheinwerfern 12 ausgesandten Abblendlichtbündel erhöht wird. Dabei wird die Lage der Helldunkelgrenze der Abblendlichtbündel angehoben, so dass sich die Abblendlichtbündel im Fernbereich oberhalb der Lage der Helldunkelgrenze in der Betriebsstellung für Abblendlicht mit den Fernlichtbündeln überlagern und der Fernbereich von beiden Lichtbündeln beleuchtet wird. Hierdurch ergeben sich hohe Beleuchtungsstärkewerte im Fernbereich und damit eine wirkungsvolle und weitreichende Beleuchtung des Fernbereichs. In den Fig. 2 und 3 ist das Kraftfahrzeug in der Vogelperspektive dargestellt, wobei die Scheinwerferanlage jeweils in ihrer Betriebsstellung für Fernlicht betrieben wird. In Fig. 2 ist dabei die Scheinwerferanlage gemäss dem Stand der Technik ausgebildet, so dass in der Betriebsstellung für Fernlicht jeweils die Abblendlichtscheinwerfer 12 und die Fernlichtscheinwerfer 14 betrieben werden, jedoch keine Änderung der Reichweite der von den Abblendlichtscheinwerfern 12 ausgesandten Abblendlichtbündel erfolgt. Die durch die Scheinwerfer ausgesandten Lichtbündel überlagern sich und sind anhand mehrerer Linien gleicher Beleuchtungsstärke, sogenannter Isoluxlinien, verdeutlicht. Es sind dabei Linien dargestellt, die Beleuchtungsstärken von 10, 4, 2 und 1 Lux repräsentieren. Die 1-Luxlinie reicht dabei bis etwa 260 m vor dem Fahrzeug. In Fig. 3 ist das Kraftfahrzeug mit der erfindungsgemässen Scheinwerferanlage dargestellt, bei der in der Betriebsstellung für Fernlicht zusätzlich zur Zuschaltung der Fernlichtscheinwerfer 14 die Reichweite der von den Abblendlichtscheinwerfern 12 ausgesandten Abblendlichtbündel erhöht ist. Die 1-Luxlinie reicht dabei bis etwa 400 m vor dem Fahrzeug, so dass das Lichtbündel insgesamt eine wesentlich grössere Reichweite aufweist als bei der Scheinwerferanlage gemäss dem Stand der Technik wie in Fig. 2 dargestellt.

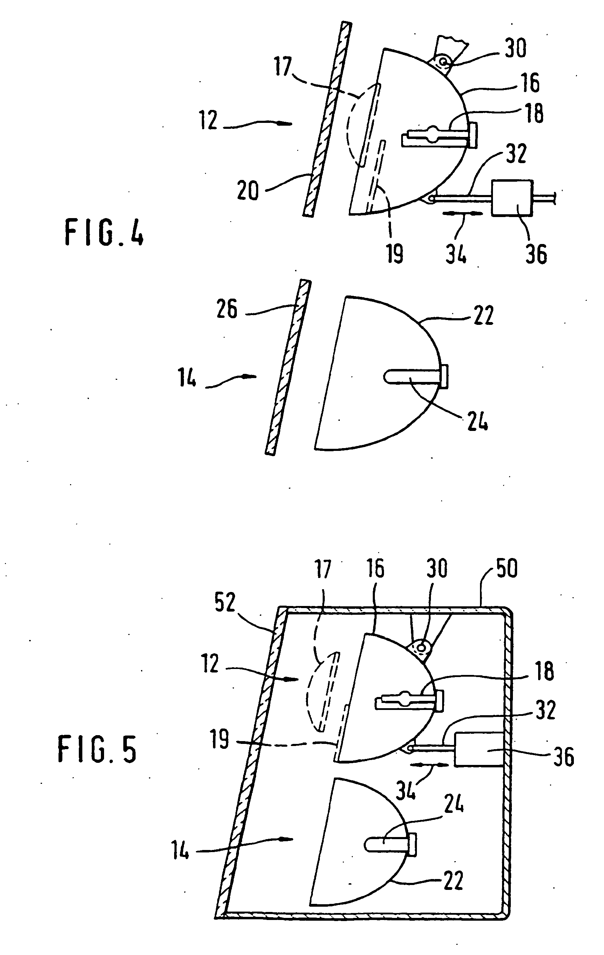

In Fig. 4 ist die Scheinwerferanlage einer Seite des Fahrzeugs in einem vertikalen Längsschnitt gemäss einem ersten Ausführungsbeispiel dargestellt. Dabei sind der Abblendlichtscheinwerfer 12 und der Fernlichtscheinwerfer 14 als getrennte Scheinwerfer ausgebildet, wobei der Abblendlichtscheinwerfer 12 beispielsweise oberhalb des Fernlichtscheinwerfers 14 angeordnet ist. Der Abblendlichtscheinwerfer 12 weist einen Reflektor 16 auf, in den eine Lichtquelle 18 eingesetzt ist, die eine Gasentladungslampe ist. Die Lichtaustrittsöffnung des Abblendlichtscheinwerfers 12 ist mit einer lichtdurchlässigen Scheibe 20 abgedeckt, die glatt ausgebildet sein kann oder zumindest bereichsweise optische Elemente aufweisen kann, durch die vom Reflektor 16 reflektiertes Licht beim Durchtritt abgelenkt wird. Das aus dem Abblendlichtscheinwerfer 12 aus tretende Lichtbündel weist die für das Abblendlicht erforderliche obere Helldunkelgrenze auf, um eine Blendung des Gegenverkehrs zu vermeiden. Die Helldunkelgrenze ist dabei vorzugsweise asymmetrisch ausgebildet, so dass das Abblendlichtbündel auf der eigenen Verkehrsseite des Fahrzeugs eine grössere Reichweite aufweist als auf der Gegenverkehrsseite. Der Abblendlichtscheinwerfer 12 kann auch nach dem Projektionsprinzip aufgebaut seine wobei dann durch den Reflektor 16 von der Lichtquelle 18 ausgesandtes Licht als ein konvergentes Lichtbündel reflektiert wird, das durch eine in dessen Strahlengang angeordnete, in Fig. 4 gestrichelt dargestellte Linse 17 hindurchtritt, wobei gegebenenfalls zwischen der Linse 17 und dem Reflektor 16 eine lichtundurchlässige Blende 19 angeordnet sein kann, durch die die Helldunkelgrenze des Abblendlichtbündels erzeugt wird. Der Reflektor 16 bildet in diesem Fall zusammen mit der Linse 17 und der Blende 19 eine Baueinheit, die insgesamt um die Achse 30 verschwenkbar ist. Der unterhalb des Abblendlichtscheinwerfers 12 angeordnete Fernlichtscheinwerfer 14 weist ebenfalls einen Reflektor 22 auf, in den eine Lichtquelle 24 eingesetzt ist, die eine Glühlampe, beispielsweise eine H1- oder H7-Lampe ist. Die Lichtaustrittsöffnung des Fernlichtscheinwerfers 14 ist mit einer lichtdurchlässigen Scheibe 26 abgedeckt, die wiederum im wesentlichen glatt ausgebildet sein kann oder zumindest bereichsweise optische Elemente aufweisen kann, durch die vom Reflektor 22 reflektiertes Licht beim Durchtritt abgelenkt wird.

Zur Ermöglichung der Änderung der Reichweite des von dem Abblendlichtscheinwerfer 12 ausgesandten Abblendlichtbündels ist der Abblendlichtscheinwerfer 12 insgesamt oder zumindest dessen Reflektor 16 um eine zumindest annähernd horizontal und senkrecht zur Längsmittelebene 10 des Fahrzeugs verlaufende Achse 30 verschwenkbar. Hierzu greift am Abblendlichtscheinwerfer 12 oder dessen Reflektor 16 ein Verstellelement 32 exzentrisch zur Schwenkachse 30 an, das in Richtung des Doppelpfeils 34 gemäss Fig. 4 bewegbar ist und dabei eine Schwenkbewegung des Abblendlichtscheinwerfers 12 bzw. von dessen Reflektor 16 um die Achse 30 bewirkt. Das Verstellelement 32 kann beispielsweise über einen Elektromotor 36 oder über einen hydraulischen oder pneumatischen Antrieb 36 betätigt werden, wobei eine Aktivierung des Antriebs 36 des Verstellelements 32 jeweils mit der Umschaltung der Scheinwerferanlage zwischen ihrer Betriebsstellung für Abblendlicht und Fernlicht sowie umgekehrt erfolgt. Bei der Umschaltung von der Betriebsstellung für Abblendlicht in die Betriebsstellung für Fernlicht wird das Verstellelement 32 durch dessen Antrieb 36 derart bewegt, dass der Abblendlichtscheinwerfer 12 um die Achse 30 nach oben verschwenkt wird. Der Schwenkwinkel, um den der Abblendlichtscheinwerfer 12 ausgehend von seiner Stellung für Abblendlicht um die Achse 30 nach oben verschwenkt wird, kann dabei beispielsweise zwischen etwa 0,5 und 2 DEG , vorzugsweise zwischen etwa 1 und 1,5 DEG betragen. Bei der in Fig. 5 dargestellten Ausführung der Scheinwerferanlage sind die Reflektoren 16 der beiden Abblendlichtscheinwerfer 12 um jeweils etwa 1,3DEG um die Achse 30 nach oben geschwenkt. Bei der Umschaltung der Scheinwerferanlage von der Betriebsstellung für Fernlicht in die Betriebsstellung für Abblendlicht wir der Abblendlichtscheinwerfer 12 entsprechend wieder um die Achse 30 nach unten verschwenkt.

Für die Abblendlichtscheinwerfer 12 ist üblicherweise eine Einrichtung vorgesehen, durch die unabhängig von der Fahrzeugneigung, mit der sich auch die Neigung des am Fahrzeugaufbau angeordneten Abblendlichtscheinwerfers 12 ändert, die Reichweite bzw. Leuchtweite des von dem Abblendlichtscheinwerfer 12 in der Betriebsstellung für Abblendlicht ausgesandten Abblendlichtbündels konstant gehalten werden kann. Derartige Leuchtweiteverstelleinrichtungen weisen bereits ein am Abblendlichtscheinwerfer 12 oder an dessen Reflektor 16 angreifendes Verstellelement 32 mit zugehörigem Antrieb 36 auf, die zu der vorstehend beschriebenen erfindungsgemässen Verschwenkung des Abblendlichtscheinwerfers 12 oder dessen Reflektors 16 zur Erhöhung der Reichweite des von diesem ausgesandten Abblendlichtbündels in der Betriebsstellung der Scheinwerferanlage für Fernlicht genutzt werden kann. Bei unbeladenem Fahrzeug mit einer sich dabei ergebenden Fahrzeugneigung befindet sich der Abblendlichtscheinwerfer 12 in der Betriebsstellung für Abblendlicht in einer Grundstellung, in der das von diesem ausgesandte Abblendlichtbündel die vorgeschriebene Reichweite bzw. Leuchtweite aufweist, bei der keine Blendung des Gegenverkehrs auftritt. Bei zunehmender Beladung des Fahrzeugs ändert sich dabei die Neigung des Fahrzeugs, da das Fahrzeugheck einfedert, was dazu führen würde, dass sich die Neigung des Abblendlichtscheinwerfers 12 und damit die Neigung des von diesem ausgesandten Abblendlichtbündels ebenfalls ändern würde, was zu einer Blendung des Gegenverkehrs führen würde. Um dies zu verhindern ist durch die Leuchtweiteregelungseinrichtung der Abblendlichtscheinwerfer 12 oder dessen Reflektor 16 zum Ausgleich der Neigungsänderung des Fahrzeugs um die Achse 30 nach unten verschwenkbar, so dass die Leuchtweite des Abblendlichtbündels zumindest annähernd konstant gehalten wird. Die Leuchtweiteregelungseinrichtung kann dabei manuell vom Fahrzeuglenker aktiviert werden oder automatisch wirksam sein, wobei diese dann zusätzlich eine Sensoreinrichtung aufweist, durch die die Fahrzeugneigung ermittelt wird und durch die abhängig von der Fahrzeugneigung der Antrieb 36 für das Verstellelement 32 aktiviert wird um die Leuchtweite des Abblendlichtbündels konstant zu halten. Die vorstehend beschriebene Verschwenkung des Abblendlichtscheinwerfer 12 bzw. von dessen Reflektor 16 zur Erhöhung der Reichweite des Abblendlichtbündels in der Betriebsstellung für Fernlicht erfolgt ausgehend von der durch die Leuchtweiteregelungseinrichtung bestimmten Stellung in der Betriebsstellung für Abblendlicht und bei der Umschaltung in die Betriebsstellung auch wieder in diese Stellung zurück.

In Fig. 5 ist die Scheinwerferanlage gemäss einem zweiten Ausführungsbeispiel dargestellt, bei dem der Abblendlichtscheinwerfer 12 und der Fernlichtscheinwerfer 14 zu einer gemeinsamen Scheinwerfereinheit zusammengefasst sind. Die Scheinwerfereinheit weist ein Gehäuse 50 auf, in dem ein Reflektor 16 mit darin eingesetzter Lichtquelle 18 für den Abblendlichtscheinwerfer 12 und ein Reflektor 22 mit darin eingesetzter Lichtquelle 24 für den Fernlichtscheinwerfer 14 angeordnet sind. Die Lichtquelle 18 des Abblendlichtscheinwerfers 12 ist eine Gasentladungslampe und die Lichtquelle 24 des Fernlichtscheinwerfers 14 ist eine Glühlampe, beispielsweise eine H1- oder H7-Lampe. Die Lichtaustrittsöffnung der Scheinwerfereinheit ist mit einer lichtdurchlässigen Scheibe 52 abgedeckt, die im wesentlichen glatt ausgebildet sein kann oder zumindest bereichsweise optische Elemente aufweisen kann. Die Abdeckscheibe 52 kann dabei in ihren verschiedenen Teilbereichen, durch die die vom Reflektor 16 des Abblendlichtscheinwerfers 12 und vom Reflektor 22 des Fernlichtscheinwerfers 14 reflektierten Lichtbündel hindurchtreten unterschiedliche optische Elemente aufweisen. Der Reflektor 16 des Abblendlichtscheinwerfers 12 ist unabhängig vom Reflektor 22 des Fernlichtscheinwerfers 14 im Gehäuse 50 um die horizontale Achse 30 mittels des an diesem angreifenden und durch den Antrieb 36 bewegbaren Verstellelements 32 verschwenkbar. Der Abblendlichtscheinwerfer 12 kann auch nach dem Projektionsprinzip aufgebaut sein und zusätzlich eine im Strahlengang des vom Reflektor 16 reflektierten Lichtbündels angeordnete, in Fig. 5 gestrichelt dargestellte Linse 17 aufweisen sowie gegebenenfalls eine zwischen der Linse 17 und dem Reflektor 16 angeordnete ebenfalls gestrichelt dargestellte lichtundurchlässige Blende 19. Der Reflektor 16 bildet dabei zusammen mit der Linse 17 sowie der Blende 19 eine Baueinheit, die insgesamt um die Achse 30 im Gehäuse 50 verschwenkbar ist. Die Verschwenkung des Reflektors 16 des Abblendlichtscheinwerfers 12 zwischen den Betriebsstellungen der Scheinwerferanlage für Abblendlicht und für Fernlicht erfolgt in einem Bereich von etwa 0,5 bis 2 DEG , vorzugsweise von etwa 1 bis 1,5 DEG . Auch beim zweiten Ausführungsbeispiel der Scheinwerferanlage werden wie vorstehend beim ersten Ausführungsbeispiel angegeben das Verstellelement 32 sowie dessen Antrieb 36 vorzugsweise von einer Leuchtweiteregelungseinrichtung mitgenutzt.

Eine Änderung der Reichweite des von dem Abblendlichtscheinwerfer 12 ausgesandten Abblendlichtbündels kann abweichend zu den vorstehend beschriebenen Ausführungsbeispielen auch dadurch erfolgen, dass beispielsweise die Lichtquelle 18 des Abblendlichtscheinwerfers 12 zwischen verschiedenen Stellungen bewegbar ist. Weiterhin alternativ oder zusätzlich zu dieser Ausführung kann auch vorgesehen werden, dass eine mit optischen Elementen versehene lichtdurchlässige Scheibe, die im Strahlengang des durch den Reflektor 16 des Abblendlichtscheinwerfers 12 reflektierten Lichtbündels angeordnet ist, bewegbar ist, um das durch den Reflektor 16 reflektierte Lichtbündel in unterschiedlicher Weise abzulenken und dabei eine Änderung der Reichweite des von dem Abblendlichtscheinwerfer 12 ausgesandten Lichtbündels zu bewirken.

Die vorstehend beschriebene Erhöhung der Reichweite des von dem wenigstens einen Abblendlichtscheinwerfer 12 ausgesandten Lichtbündels in der Betriebsstellung für Fernlicht kann auch abhängig von der Fahrgeschwindigkeit des Fahrzeugs erfolgen. Dabei kann vorgesehen sein, dass bei relativ geringer Fahrgeschwindigkeit in der Betriebsstellung für Fernlicht die Reichweite des vom Abblendlichtscheinwerfer 12 ausgesandten Lichtbündels nur wenig erhöht wird und mit zunehmender Fahrgeschwindigkeit dessen Reichweite stärker erhöht wird. Hierzu kann beispielsweise eine Steuereinrichtung vorgesehen seine durch die die Fahrgeschwindigkeit erfasst und die Änderung der Reichweite des Lichtbündels entsprechend gesteuert wird. Bei der Umschaltung der Scheinwerferanlage in ihre Betriebsstellung für Abblendlicht wird jedoch die Reichweite des vom Abblendlichtscheinwerfer 12 ausgesandten Lichtbündels schnellstmöglich auf die vorgeschriebene Reichweite zur Vermeidung einer Blendung des Gegenverkehrs reduziert.

## Patentansprüche

1. Scheinwerferanlage für Fahrzeuge für Abblendlicht und Fernlicht mit wenigstens einem Scheinwerfer (12) zur Erzeugung des Abblendlichts und mit wenigstens einem weiteren Scheinwerfer (14), der zur Erzeugung des Fernlichts zusätzlich zu dem wenigstens einen Abblendlichtscheinwerfer (12) betreibbar ist, **dadurch gekennzeichnet, dass** die Lichtquelle des wenigstens einen Abblendlichtscheinwerfers (12)
eine Gasentladungslampe (18)ist, dass die Lichtquelle des wenigstenseinen Fernlichtscheinwerfers (14)
eine Glühlampe (24) ist und dass in der
Betriebsstellung der Scheinwerferanlage für Fernlicht die Reichweite des von dem wenigstens einen Abblendlichtscheinwerfer (12) ausgesandten Lichtbündels gegenüber dessen Reichweite in der Betriebsstellung der Scheinwerferanlage für Abblendlicht erhöht wird.

2. Scheinwerferanlage nach Anspruch 1, **dadurch gekennzeichnet, dass** zur Änderung der Reichweite des von dem wenigstens einen Abblendlichtscheinwerfer (12) ausgesandten Lichtbündels zumindest ein Teil (16) des Abblendlichtscheinwerfers (12) ausgehend von einer Stellung in der Betriebsstellung der Scheinwerferanlage für Abblendlicht in deren Betriebsstellung für Fernlicht um eine wenigstens annähernd horizontale Achse (30) nach oben verschwenkbar ist.

3. Scheinwerferanlage nach Anspruch 2, **dadurch gekennzeichnet, dass** zumindest der Teil (16) des wenigstens einen Abblendlichtscheinwerfers (12) um etwa 0,5 bis 2°, vorzugsweise etwa 1 bis 1,5° verschwenkbar ist.

4. Scheinwerferanlage nach Anspruch 2 oder 3, **dadurch gekennzeichnet, dass** der gesamte Abblendlichtscheinwerfer (12) um die Achse (30) verschwenkbar ist.

5. Scheinwerferanlage nach Anspruch 2 oder 3, **dadurch gekennzeichnet, dass** als Teil des wenigstens einen Abblendlichtscheinwerfers (12) zumindest dessen Reflektor (16) verschwenkbar ist.

6. Scheinwerferanlage nach einem der Ansprüche 2 bis 5, **dadurch gekennzeichnet, dass** zur Verschwenkung zumindest des Teils (16) des wenigstens einen Abblendlichtscheinwerfers (12) eine Verstelleinrichtung (32, 36) einer diesem zugeordneten Leuchtweitenregelungseinrichtung verwendet wird, durch die die Leuchtweite des durch den wenigstens einen Abblendlichtscheinwerfer (12) in der Betriebsstellung für Abblendlicht ausgesandten Lichtbündels unabhängig von der Neigung des Fahrzeugs konstant gehalten werden kann.

## Claims

1. Head lamp system for vehicles for low beam light and high beam light with at least one head lamp (12) for generating the low beam light and at least one other head lamp (14) which can be operated in addition to the at least one low beam head lamp (12) in order to generate the high beam light, **characterised in that** the light source of the at least one low beam head lamp (12) is a gas discharge lamp (18), the light source of the at least one high beam head lamp (14) is an incandescent lamp (24), and when the head lamp system is in the operating position for high beam light, the range of the light beam emitted by the at least one low beam head lamp (12) is greater than its range when the head lamp system is in the operating position for low beam light.

2. Head lamp system as claimed in claim 1, **characterised in that** in order to change the range of the light beam emitted by the at least one low beam head lamp (12), at least a part (16) of the low beam head lamp (12) can be pivoted upwards about an at least approximately horizontal axis (30) from a position in which the head lamp system operates at low beam light into its operating position for high beam light.

3. Head lamp system as claimed in claim 2, **characterised in that** at least the part (16) of the at least one low beam head lamp (12) can be pivoted by approximately 0.5 to 2°, preferably approximately 1 to 1.5°.

4. Head lamp system as claimed in claim 2 or 3, **characterised in that** the entire low beam head lamp (12) can be pivoted about the axis (30).

5. Head lamp system as claimed in claim 2 or 3, **characterised in that** as part of the at least one low beam head lamp (12), at least its reflector (16) can be pivoted.

6. Head lamp system as claimed in one of claims 2 to 5, **characterised in that** an adjusting device (32, 36) of a lamp range regulating device co-operating therewith is used to pivot at least the part (16) of the at least one low beam head lamp (12), by means of which the light range of the light beam emitted by the at least one low beam head lamp (12) in the operating position for low beam light can be kept constant irrespective of the inclination of the vehicle.

## Revendications

1. Installation de projecteurs de véhicule pour des feux de croisement et des feux de route comportant au moins un projecteur (12) générant les feux de croisement et au moins un autre projecteur (14) pouvant être actionné pour générer les feux de route, en plus du projecteur (12) pour les feux de croisement,
**caractérisée en ce que**
la source lumineuse du projecteur (12) générant les feux de croisement est une lampe à décharge de gaz (18), la source lumineuse du projecteur (14) générant les feux de route est une lampe à incandescence (24), et, dans la position de fonctionnement du projecteur générant les feux de route, la portée du faisceau lumineux émis par le projecteur (12) générant les feux de croisement est augmentée par rapport à sa portée dans la position de fonctionnement de l'installation de projecteur générant les feux de croisement.

2. Installation de projecteurs de véhicule selon la revendication 1,
**caractérisée en ce que**
pour modifier la portée du faisceau lumineux émis par au moins un projecteur de feu de croisement (12), on bascule vers le haut au moins une partie (16) du projecteur de feu de croisement (12) à partir de sa position de feu de croisement dans une position de feu de route autour d'un axe (30) sensiblement horizontal.

3. Installation de projecteurs de véhicule selon la revendication 2,
**caractérisée en ce qu'**
au moins la partie (16) d'au moins un projecteur de feu de croisement (12) est basculée d'environ 0,5 à 2°, de préférence d'environ 1 jusqu'à 1,5°.

4. Installation de projecteurs de véhicule selon la revendication 2 ou 3,
**caractérisée en ce qu'**
on bascule l'ensemble du projecteur de feu de croisement (12) autour de l'axe (30).

5. Installation de projecteurs de véhicule selon la revendication 2 ou 3,
**caractérisée en ce que**
comme partie d'au moins un projecteur de feu de croisement (12), on bascule au moins son réflecteur (16).

6. Installation de projecteurs de véhicule selon l'une des revendications 2 à 5,
**caractérisée en ce que**
pour basculer au moins la partie (16) d'au moins un projecteur de feu de croisement (12), on utilise une installation de réglage (32, 36) d'une installation de poursuite de réglage associée à celle-ci et qui permet de maintenir constante la portée d'éclairage du projecteur de feu de croisement (12) dans la position de fonctionnement du faisceau d'éclairage émis pour le feu de croisement, indépendamment de l'inclinaison du véhicule.
